# EUROPEAN PATENT SPECIFICATION

(11) **EP 3 000 702 B1**
(45) Date of publication and mention of the grant of the patent: **05.07.2017**
(21) Application number: 15150549.2
(22) Date of filing: 09.01.2015
(51) Int. Cl.: B62J 17/06, B62K 19/46, B62J 17/02

(54) **SADDLE-RIDING TYPE VEHICLE**
FAHRZEUG MIT EINEM SATTEL
VÉHICULE DE TYPE À ENFOURCHER

(30) Priority: 26.09.2014 JP 2014196202
(43) Date of publication of application: 30.03.2016
(73) Proprietor: Yamaha Hatsudoki Kabushiki Kaisha, Iwata-shi, Shizuoka 438-8501 (JP)
(72) Inventor: Kikuchi, Hiroshi, Iwata-shi, Shizuoka 438-8501 (JP)
(74) Representative: Grünecker Patent- und Rechtsanwälte PartG mbB

(56) References cited:
- EP-A1- 2 055 621
- EP-A1- 2 128 007
- EP-A1- 2 295 315
- EP-A2- 2 311 716
- FR-A1- 2 519 929
- JP-A- H11 198 878
- JP-A- S63 232 086
- JP-A- 2000 219 178
- JP-U- H0 332 576
- JP-U- S61 192 986
- US-A- 4 697 842
- US-A- 4 807 919
- US-A1- 2008 030 041

## Description

The present invention relates to a saddle-riding type vehicle according to thepreamble of independent claim 1. Such a vehicle is known from US2008/0030041A1.

A saddle-riding type vehicle, equipped with a storage portion disposed in the rear portion of a front cover, has been well-known so far. Accordingly the storage portion is not provided with a lid and upwardly opens as described in, for instance, JP JP-A-2007-253835 or the corresponding US 2008/0030041 A1.

When the storage portion upwardly opens as described above, there is a possibility that water intrudes into the storage portion when it rains. In general, the front surface of the front cover tilts obliquely upward to the rear. However, water coming from ahead of the vehicle inevitably intrudes into the storage portion disposed in the rear portion of the front cover when getting across the front surface of the front cover.

Incidentally, the storage portion preferably includes a large capacity. However, enlarging the storage portion is not easy because of various restrictions. For example, when the storage portion is backwardly enlarged, this hinders a rider from riding on/off the vehicle and is thus not preferable. Contrarily, when the storage portion is forwardly enlarged, this inevitably reduces a space to be produced inside the front cover. Moreover, when the front cover is enlarged in the back-and-forth direction so as to reliably produce a space for enlarging the storage portion, this inevitably enlarges the vehicle in the back-and-forth direction and is thus not preferable.

It is an object of the present invention to provide a saddle-riding type vehicle whereby enlarging the vehicle in the back-and-forth direction can be inhibited while a storage portion can be produced with a large capacity by expanding a space to be produced inside a front cover, and further, water can be inhibited from intruding into the storage portion from ahead of the vehicle.

According to the present invention said object is solved by saddle-riding type vehicle having the features of independent claim 1. Preferred embodiments are laid down in the dependent claims.

A saddle-riding type vehicle according to an aspect of the present teaching includes a head pipe, a steering shaft, a handle, a handle cover and a front cover. The steering shaft is turnably supported by the head pipe. The handle is supported by an upper end of the steering shaft and includes a right grip portion and a left grip portion. The handle cover covers front and rear sides of the handle. The front cover is disposed lower than the handle cover. The front cover includes a front cover rear portion and a front cover front portion. The front cover rear portion covers a rear side of the head pipe. The front cover front portion covers a front side of the head pipe and is disposed in front of the front cover rear portion. The front cover front portion is disposed so as to tilt obliquely upward to rear. The front cover rear portion includes a storage portion disposed laterally to the steering shaft. An upper surface of the front cover includes an upper surface middle portion and an upper surface lateral portion. The upper surface middle portion includes an opening enabling the steering shaft to pass therethrough. The upper surface lateral portion is disposed laterally to the upper surface middle portion and is disposed in front of the storage portion in a vehicle plan view. The upper surface lateral portion is at least partially located forward of the handle cover in the vehicle plan view.

In the saddle-riding type vehicle according to the present aspect, the upper surface lateral portion of the front cover is at least partially located forward of the handle cover. With the structure, the upper end of the tilt surface of the front cover front portion can be disposed as forward as possible, even where the lower end of the tilt surface of the front cover front portion is fixed. Thus, a large interval can be produced between the front cover front portion and the front cover rear portion in the back-and-forth direction. Accordingly, enlarging the vehicle in the back-and-forth direction can be inhibited, and further, the space produced inside the front cover can be easily expanded. Hence, the capacity of the storage portion can be easily increased. Further, the tilt angle of the front cover front portion with respect to the vertical direction can be easily reduced due to the aforementioned effect that the upper end of the tilt surface of the front cover front portion can be disposed as forward as possible even where the lower end of the tilt surface of the front cover front portion is fixed. Accordingly, it is possible to inhibit occurrence of a situation that water moves from the front cover front portion, gets across the upper surface lateral portion and intrudes into the storage portion.

The front cover front portion is provided separately from the front cover rear portion. Further, the upper surface lateral portion is included in the front cover rear portion. Yet further, a boundary between the upper surface lateral portion and the front cover front portion is at least partially located forward of the handle cover in the vehicle plan view. In the structure, it is possible to easily form the upper surface lateral portion of the front cover in a shape greatly extending in the back-and-forth direction. Thus, the space produced inside the front cover can be expanded, and the capacity of the storage portion can be easily expanded. The boundary between the upper surface lateral portion and the front cover front portion partially extends to the rearward and to one of the right and left sides in the vehicle plan view.

The front cover rear portion preferably includes a tilt portion located over the storage portion. Further, the tilt portion preferably tilts obliquely upward to front and continues to an upper surface of the front cover rear portion. In the structure, an object can be easily put in or taken out of the storage portion.

The upper surface of the front cover rear portion preferably includes a recess forwardly recessed in the vehicle plan view. Further, the recess is preferably located over the storage portion. In the structure, the middle portion of the recess is located forward of the right and left ends of the recess. Thus, an object can be easily put in or taken out of the storage portion. Further, with the positional arrangement of the upper surface lateral portion of the front cover, water cannot easily intrude into the storage portion. Hence, even when the recess is disposed over the storage portion, water cannot easily intrude into the storage portion. Consequently, it is possible to simultaneously achieve easiness in putting/taking an object in/out of the storage portion and difficulty in intrusion of water into the storage portion.

A front end of the recess is preferably located forward of the steering shaft. In the structure, an object can be further easily put in or taken out of the storage portion.

The front cover rear portion preferably includes a tilt portion located over the storage portion. Further, the tilt portion preferably tilts obliquely upward to front and continues to the recess. In the structure, an object can be easily put in or taken out of the storage portion.

The upper surface middle portion preferably includes a convexo-concave portion located in front of the opening. Further, the convexo-concave portion preferably extends in a vehicle back-and-forth direction. For example, a concave groove of the convexo-concave portion extends in the vehicle back-and-forth direction. Alternatively, a convex protrusion of the convexo-concave portion extends in the vehicle back-and-forth direction. In the structure, the stiffness of the upper surface middle portion can be enhanced by the convexo-concave portion. Further, water can be inhibited from flowing toward the upper surface lateral portion by the structure of the convexo-concave portion extending in the vehicle back-and-forth direction. Accordingly, intrusion of water into the storage portion can be inhibited.

The upper surface lateral portion and the front cover front portion preferably form a convex shape upwardly bending in the boundary between the upper surface lateral portion and the front cover front portion. In the structure, it is possible to inhibit occurrence of a situation that water gets across the boundary between the upper surface lateral portion and the front cover front portion and intrudes into the storage portion.

### Advantageous Effects of Invention

According to the present invention, it is possible to produce a saddle-riding type vehicle whereby enlarging the vehicle in the back-and-forth direction can be inhibited while a storage portion can be produced with a large capacity by expanding a space to be produced inside a front cover, and further, water can be inhibited from intruding into the storage portion from ahead of the vehicle.

### BRIEF DESCRIPTION OF THE DRAWINGS

Referring now to the attached drawings which form a portion of this original disclosure:
FIG. 1 is a side view of a saddle-riding type vehicle;
FIG. 2 is a front view of the saddle-riding type vehicle;
FIG. 3 is a perspective view of a front portion of the saddle-riding type vehicle;
FIG. 4 is a plan view of the front portion of the saddle-riding type vehicle;
FIG. 5 is an exploded perspective view of the front portion of the saddle-riding type vehicle;
FIG. 6 is a perspective view of the front portion of the saddle-riding type vehicle in a condition that a handle cover is detached therefrom;
FIG. 7 is a plan view of the front portion of the saddle-riding type vehicle in the condition that the handle cover is detached therefrom;
FIG. 8 is a rear view of the front cover;
FIG. 9 is a cross-sectional view of FIG. 8 taken along a cutaway line IX-IX; and
FIG. 10 is a cross-sectional view of FIG. 8 taken along a cutaway line X-X.

### DETAILED DESCRIPTION OF THE EMBODIMENTS

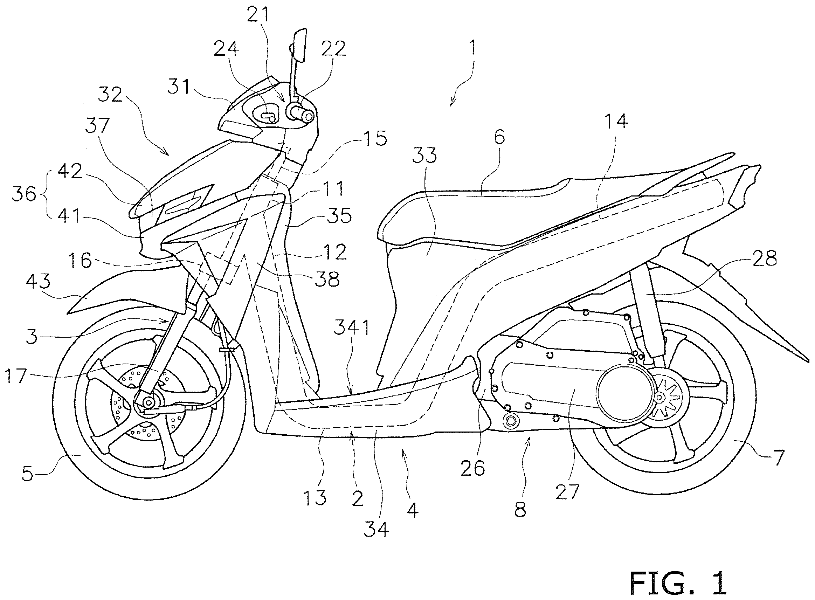

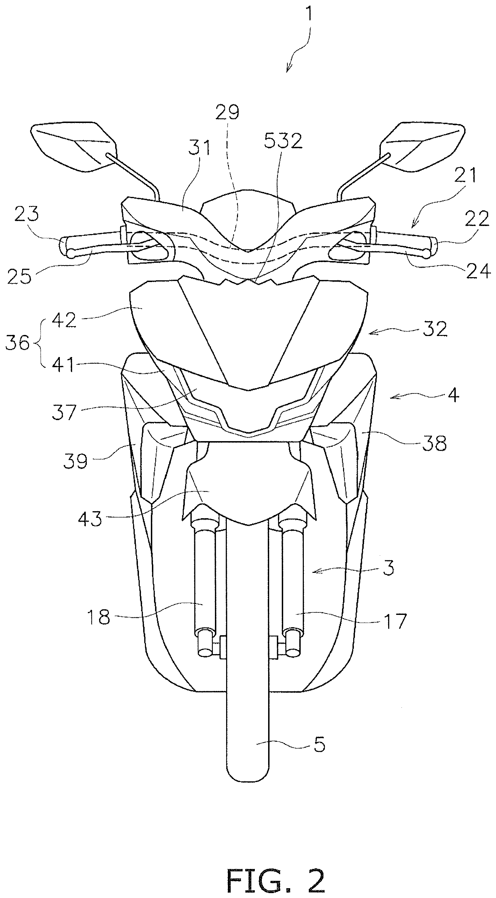

A saddle-riding type vehicle 1 according to an exemplary embodiment will be hereinafter explained with reference to the attached drawings. FIG. 1 is a side view of the saddle-riding type vehicle 1. FIG. 2 is a front view of the saddle-riding type vehicle 1. The saddle-riding type vehicle 1 according to the present exemplary embodiment is a scooter-type vehicle. As shown in FIG. 1, the saddle-riding type vehicle 1 includes a vehicle body frame 2, a front fork 3, a vehicle body cover 4, a front wheel 5, a seat 6, a rear wheel 7 and a power unit 8.

It should be noted that in the present specification, the terms "back-and-forth direction", "up-and-down direction" and "right-and-left direction" of the saddle-riding type vehicle 1 refer to the back-and-forth direction, the up-and-down direction and the right-and-left direction seen from a rider of the saddle-riding type vehicle 1. Specifically, the back-and-forth direction is defined as not only indicating a given direction arranged in parallel to the back-and-forth direction of the saddle-riding type vehicle 1 but also including a given direction tilting at an angle falling in a range of ±45 degrees with respect to the back-and-forth direction of the saddle-riding type vehicle 1. In other words, a given direction, which is closer to the back-and-forth direction than to the right-and-left direction and the up-and-down direction, is classified as the back-and-forth direction.

Likewise, the up-and-down direction is defined as including a given direction tilting at an angle falling in a range of ±45 degrees with respect to the up-and-down direction of the saddle-riding type vehicle 1. In other words, a given direction, which is closer to the up-and-down direction than to the back-and-forth direction and the right-and-left direction, is classified as the up-and-down direction.

Further likewise, the right-and-left direction is defined as including a given direction tilting at an angle falling in a range of ±45 degrees with respect to the right-and-left direction of the saddle-riding type vehicle 1. In other words, a given direction, which is closer to the right-and-left direction than to the back-and-forth direction and the up-and-down direction, is classified as the right-and-left direction.

The vehicle body frame 2 includes a head pipe 11, a down frame 12, a lower frame 13 and a rear frame 14. The down frame 12 downwardly extends from the head pipe 11. The lower frame 13 is connected to the lower portion of the down frame 12. The lower frame 13 backwardly extends from the lower portion of the down frame 12. The rear frame 14 is connected to the lower frame 13. The rear frame 14 backwardly and upwardly extends from the rear portion of the lower frame 13.

The front fork 3 includes a steering shaft 15, a bracket 16 and a pair of a left suspension 17 and a right suspension 18. The steering shaft 15 is inserted into the head pipe 11. The steering shaft 15 is supported by the head pipe 11 so as to be turnable right and left. The lower portion of the steering shaft 15 is connected to the left and right suspensions 17 and 18 through the bracket 16. The front wheel 5 is rotatably supported by the suspensions 17 and 18.

The upper portion of the steering shaft 15 is connected to a handle 21. The handle 21 is supported by the upper end of the steering shaft 15. The handle 21 includes a left grip portion 22, a right grip portion 23 and a handlebar 29. The left grip portion 22 and the right grip portion 23 are coupled through the handlebar 29. In the present exemplary embodiment, the left grip portion 22 is disposed on the left side of a handle cover 31 to be described. The right grip portion 23 is disposed on the right side of the handle cover 31. A first lever member 24 is disposed forward of the left grip portion 22. A second lever member 25 is disposed forward of the right grip portion 23. For example, the first lever member 24 and the second lever member 25 are brake levers.

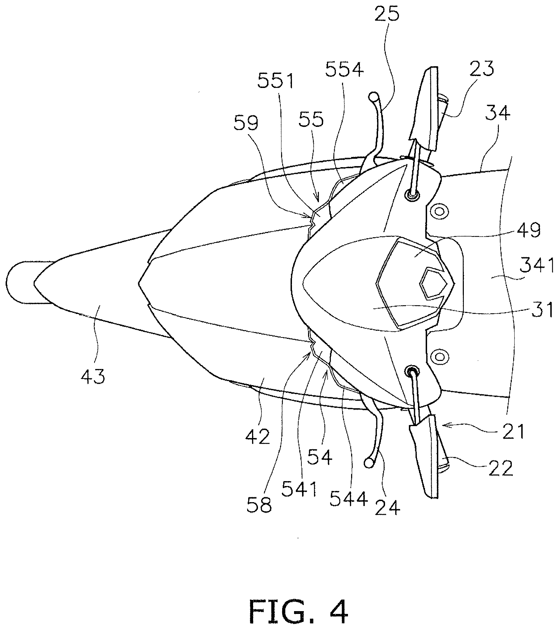

The vehicle body cover 4 includes the handle cover 31, a front cover 32, a rear cover 33 and a lower cover 34. The handle cover 31 covers the front side and the rear side of the handle 21. A meter panel 49 is attached to the upper surface of the handle cover 31 (see FIG. 4). The meter panel 49 includes, for instance, a tachometer. The front cover 32 is disposed below the handle cover 31. The front cover 32 covers the surrounding of the head pipe 11 and the down frame 12.

The rear cover 33 covers the surrounding of the rear frame 14. The seat 6 is disposed over the rear cover 33. The seat 6 is disposed rearward of the head pipe 11. The seat 6 is supported by the vehicle body frame 2. When described in detail, the seat 6 is supported by a storage box (not shown in the drawings) and the vehicle body frame 2. When described in more detail, the front portion of the seat 6 is supported by the storage box (not shown in the drawings), whereas the rear portion of the seat 6 is supported by the rear frame 14 through a stay (not shown in the drawings). The seat 6 is supported by the rear frame 14 through the stay (not shown in the drawings).

The lower cover 34 is disposed between the front cover 32 and the rear cover 33. The lower cover 34 covers the surrounding of the lower frame 13. The upper surface of the lower cover 34 includes a flat footboard 341. The flat footboard 341 is disposed below and forward of the seat 6. The flat footboard 341 is disposed over the lower frame 13. The flat footboard 341 is disposed for enabling a rider to put his/her feet thereon. The flat footboard 341 has a flat shape.

It should be noted that "a flat shape" of the flat footboard 341 means that the flat footboard 341 is flat enough to enable a rider to put his/her feet on any portion thereof. In other words, the flat footboard 341 may include, for instance, convexo-concave portions for an anti-slippage purpose or so forth.

The power unit 8 is disposed under the seat 6. The power unit 8 is pivotably supported by the vehicle body frame 2. The power unit 8 includes an engine 26 and a transmission 27. The rear wheel 7 is rotatably supported by the power unit 8. The rear wheel 7 is supported by the vehicle body frame 2 through a rear suspension 28.

Next, a structure of the front cover 32 will be explained in detail. The front cover 32 includes a front cover rear portion 35 and a front cover front portion 36. The front cover front portion 36 is disposed forward of the front cover rear portion 35. The front cover front portion 36 covers the front side of the head pipe 11. The front cover front portion 36 is a discrete element provided separately from the front cover rear portion 35. The front cover front portion 36 is a member made of resin. A headlight 37 is attached to the front cover front portion 36. A front fender 43 is disposed under the front cover front portion 36.

The front cover rear portion 35 covers the rear side of the head pipe 11. The front cover rear portion 35 covers the rear side of the down frame 12. The front cover rear portion 35 is a member made of resin. The front cover rear portion 35 is disposed forward of the seat 6. The lower end of the front cover rear portion 35 is connected to the flat footboard 341.

The front cover 32 includes a first front cover lateral portion 38 and a second front cover lateral portion 39. The first front cover lateral portion 38 is disposed on one of the right and left sides of the front cover front portion 36. The second front cover lateral portion 39 is disposed on the other of the right and left sides of the front cover front portion 36. In the present exemplary embodiment, the first front cover lateral portion 38 is disposed on the left side of the front cover front portion 36. The second front cover lateral portion 39 is disposed on the right side of the front cover front portion 36.

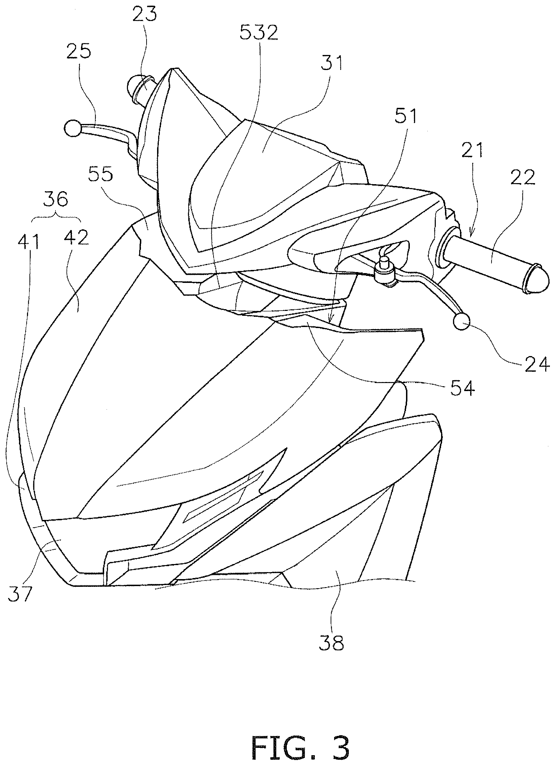

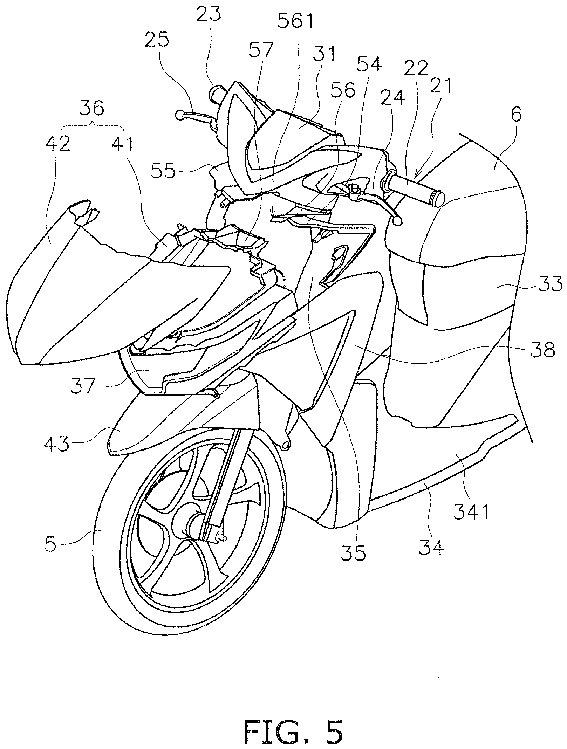

FIG. 3 is a perspective view of the front portion of the saddle-riding type vehicle 1. FIG. 4 is a plan view of the front portion of the saddle-riding type vehicle 1. FIG. 5 is an exploded perspective view of the front portion of the saddle-riding type vehicle 1. It should be noted that a portion of the internal structure of the saddle-riding type vehicle 1 is not shown in FIG. 5 for easy understanding.

As shown in FIGS. 3 to 5, the front cover front portion 36 includes a body 41 and a front face 42. The headlight 37 is attached to the body 41. The front fender 43 is disposed under the body 41.

The front face 42 is a discrete element provided separately from the body 41. The front face 42 is attached to the body 41. The front face 42 composes the tilt surface of the front cover front portion 36. The front face 42 is disposed over the body 41. The front face 42 is disposed so as to tilt obliquely upward to the rear. The front face 42 is disposed in front of the front cover rear portion 35. The front face 42 is disposed over the headlight 37.

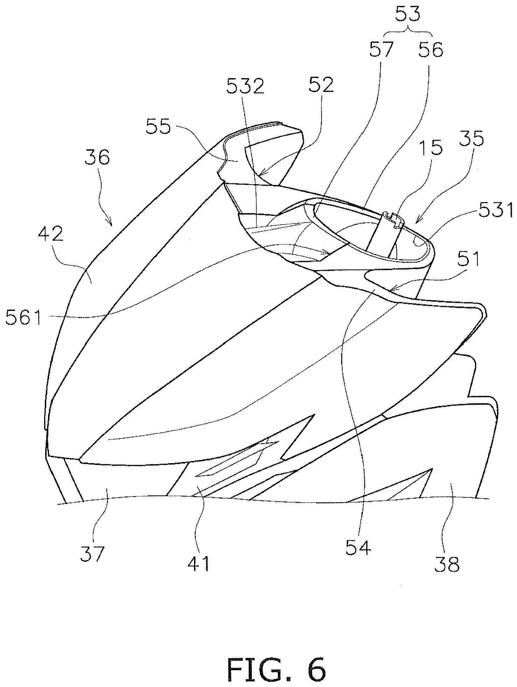

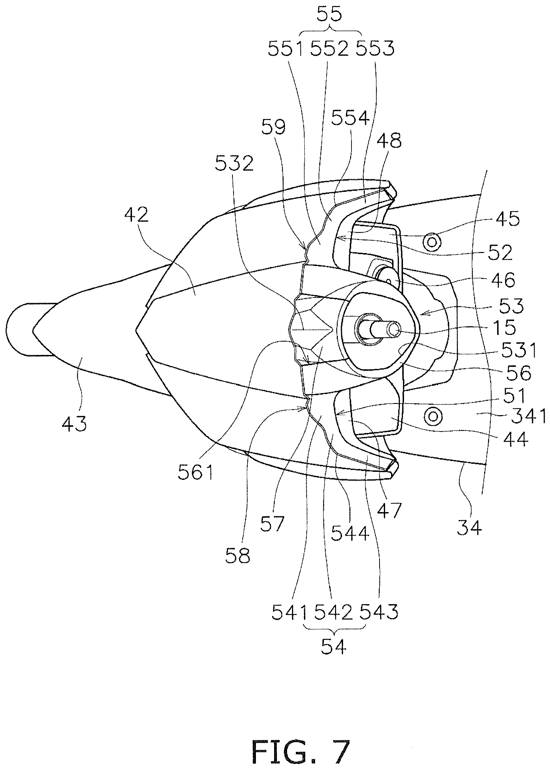

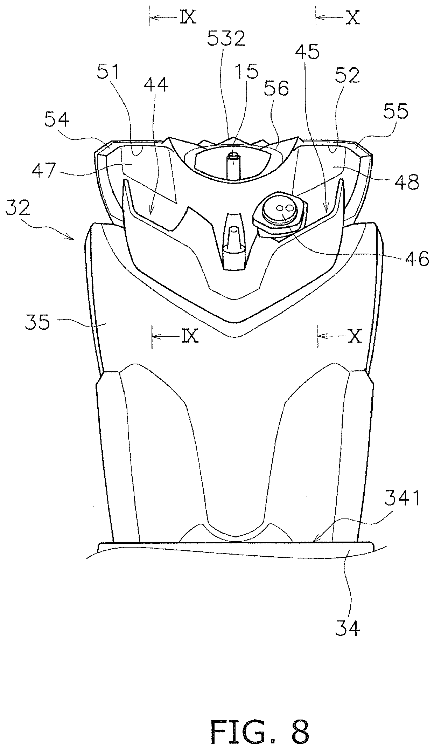

FIG. 6 is a perspective view of the front portion of the saddle-riding type vehicle 1 in a condition that the handle cover 31 is detached therefrom. FIG. 7 is a plan view of the front portion of the saddle-riding type vehicle 1 in the condition that the handle cover 31 is detached therefrom. FIG. 8 is a rear view of the front cover 32.

The front cover rear portion 35 includes a first storage portion 44 and a second storage portion 45. The first storage portion 44 and the second storage portion 45 are disposed in alignment in the right-and-left direction. The first storage portion 44 is disposed on one of the right and left sides of the steering shaft 15. The second storage portion 45 is disposed on the other of the right and left sides of the steering shaft 15. In the present exemplary embodiment, the first storage portion 44 is disposed on the left side of the steering shaft 15. The second storage portion 45 is disposed on the right side of the steering shaft 15. A key switch 46 is disposed adjacently to the second storage portion 45.

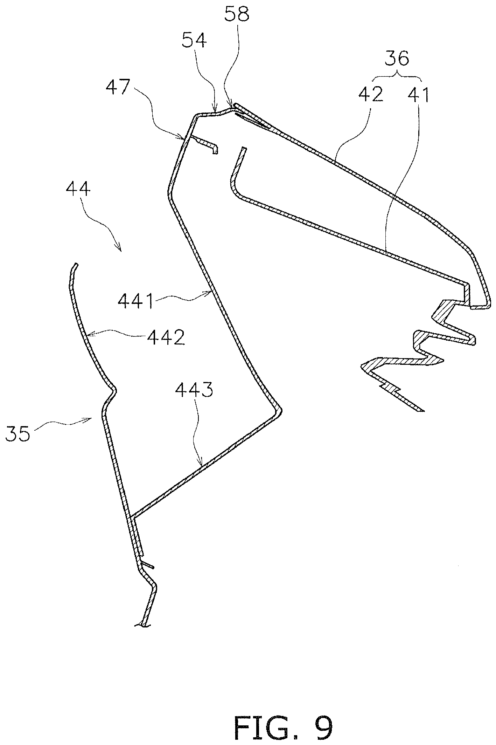

FIG. 9 is a cross-sectional view of FIG. 8 taken along a cutaway line IX-IX. A front surface 441 of the first storage portion 44 tilts obliquely downward to the front. A rear surface 442 of the first storage portion 44 tilts obliquely downward to the front. A bottom surface 443 of the first storage portion 44 tilts obliquely upward to the front.

The front cover rear portion 35 includes a first tilt portion 47. The first tilt portion 47 tilts obliquely upward to the front. The first tilt portion 47 is located over the first storage portion 44. The lower end of the first tilt portion 47 continues to the front surface 441 of the first storage portion 44.

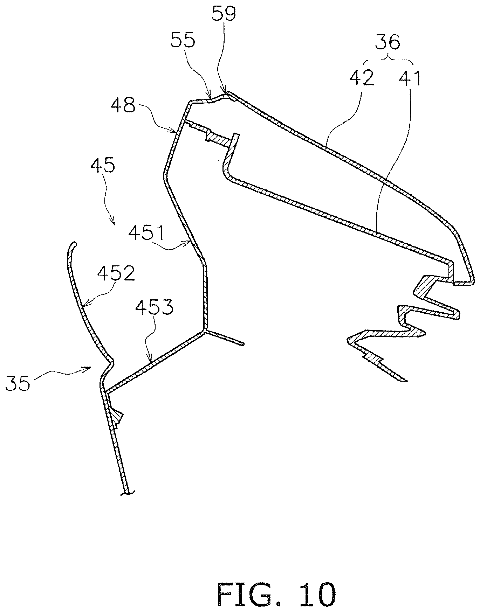

FIG. 10 is a cross-sectional view of FIG. 8 taken along a cutaway line X-X. A front surface 451 of the second storage portion 45 forwardly bends in a convex shape. A rear surface 452 of the second storage portion 45 tilts obliquely downward to the front. A bottom surface 453 of the second storage portion 45 tilts obliquely upward to the front.

The front cover rear portion 35 includes a second tilt portion 48. The second tilt portion 48 tilts obliquely upward to the front. The second tilt portion 48 is located over the second storage portion 45. The lower end of the second tilt portion 48 continues to the front surface 451 of the second storage portion 45.

As shown in FIGS. 6 to 8, the upper surface of the front cover rear portion 35 includes a first recess 51. The first recess 51 has a forwardly recessed shape in a plan view of the vehicle. The first recess 51 is located over the first storage portion 44. The front end of the first recess 51 is located forward of the steering shaft 15. The first tilt portion 47 continues to the first recess 51.

The upper surface of the front cover rear portion 35 includes a second recess 52. The second recess 52 has a forwardly recessed shape in the vehicle plan view. The second recess 52 is located over the second storage portion 45. The front end of the second recess 52 is located forward of the steering shaft 15. The second tilt portion 48 continues to the second recess 52.

The first recess 51 overlaps with the handle cover 31 in the vehicle plan view. The second recess 52 overlaps with the handle cover 31 in the vehicle plan view. The first tilt portion 47 overlaps with the handle cover 31 in the vehicle plan view. The second tilt portion 48 overlaps with the handle cover 31 in the vehicle plan view.

The upper surface of the front cover 32 includes an upper surface middle portion 53, a first upper surface lateral portion 54 and a second upper surface lateral portion 55. The upper surface middle portion 53 includes an opening 531. The steering shaft 15 is inserted through the opening 531. The upper surface middle portion 53 includes a convexo-concave portion 532 located in front of the opening 531. The convexo-concave portion 532 extends in the back-and-forth direction of the vehicle.

The upper surface middle portion 53 includes a first upper surface middle portion 56 and a second upper surface middle portion 57. As shown in FIG. 5, the first upper surface middle portion 56 is included in the front cover rear portion 35. The second upper surface middle portion 57 is included in the front cover front portion 36. When described in detail, the second upper surface middle portion 57 is included in the body 41. The second upper surface middle portion 57 is disposed in front of the steering shaft 15.

The first upper surface middle portion 56 includes a cutout 561 located in front of the opening 531. The cutout 561 backwardly extends from the front end of the first upper surface middle portion 56 and reaches the opening 531. The second upper surface middle portion 57 is attached to the cutout 561 of the first upper surface middle portion 56 by attaching the front cover front portion 36 to the front cover rear portion 35. Thus, the front side of the opening 531 is closed.

The first upper surface lateral portion 54 and the second upper surface lateral portion 55 are included in the front cover rear portion 35. The first upper surface lateral portion 54 is disposed on one of the right and left sides of the upper surface middle portion 53. The second upper surface lateral portion 55 is disposed on the other of the right and left sides of the upper surface middle portion 53. In the present exemplary embodiment, the first upper surface lateral portion 54 is disposed on the left side of the upper surface middle portion 53, whereas the second upper surface lateral portion 55 is disposed on the right side of the upper surface middle portion 53. The first upper surface lateral portion 54 is disposed in front of the first storage portion 44 in the vehicle plan view. The second upper surface lateral portion 55 is disposed in front of the second storage portion 45 in the vehicle plan view.

When described in detail, as shown in FIG. 7, the first upper surface lateral portion 54 includes a first inside portion 541, a first intermediate portion 542 and a first outside portion 543. The first inside portion 541 adjoins the upper surface middle portion 53. The first inside portion 541 more forwardly protrudes than the first intermediate portion 542. The first intermediate portion 542 is located in front of the first storage portion 44. The first intermediate portion 542 is located between the first inside portion 541 and the first outside portion 543. The first intermediate portion 542 extends in the width direction of the vehicle. The first outside portion 543 is located laterally outside the first storage portion 44. The first outside portion 543 backwardly extends. The first upper surface lateral portion 54 has a bending shape in a first bending portion 544 between the first intermediate portion 542 and the first outside portion 543.

The second upper surface lateral portion 55 includes a second inside portion 551, a second intermediate portion 552 and a second outside portion 553. The second inside portion 551 adjoins the upper surface middle portion 53. The second inside portion 551 more forwardly protrudes than the second intermediate portion 552. The second intermediate portion 552 is located in front of the second storage portion 45. The second intermediate portion 552 is located between the second inside portion 551 and the second outside portion 553. The second intermediate portion 552 extends in the vehicle width direction. The second outside portion 553 is located laterally outside the second storage portion 45. The second outside portion 553 backwardly extends. The second upper surface lateral portion 55 has a bending shape in a second bending portion 554 between the second intermediate portion 552 and the second outside portion 553.

As shown in FIG. 9, the first upper surface lateral portion 54 and the front cover front portion 36 form a convex shape upwardly bending in a boundary 58 between the first upper surface lateral portion 54 and the front cover front portion 36. When described in detail, the first upper surface lateral portion 54 and the tilt surface of the front cover front portion 36 (i.e., the front face 42) form a convex shape upwardly bending in the boundary 58 between the first upper surface lateral portion 54 and the front cover front portion 36.

As shown in FIG. 10, the second upper surface lateral portion 55 and the front cover front portion 36 form a convex shape upwardly bending in a boundary 59 between the second upper surface lateral portion 55 and the front cover front portion 36. When described in detail, the second upper surface lateral portion 55 and the tilt surface of the front cover front portion 36 (i.e., the front face 42) form a convex shape upwardly bending in the boundary 59 between the second upper surface lateral portion 55 and the front cover front portion 36.

As shown in FIG. 4, the first upper surface lateral portion 54 is partially located forward of the handle cover 31 in the vehicle plan view. In other words, the first upper surface lateral portion 54 does not partially overlap with the handle cover 31 in the vehicle plan view. The second upper surface lateral portion 55 is partially located forward of the handle cover 31 in the vehicle plan view. In other words, the second upper surface lateral portion 55 does not partially overlap with the handle cover 31 in the vehicle plan view.

When described in detail, the first inside portion 541 is partially located forward of the handle cover 31 in the vehicle plan view. Further, the first bending portion 544 is partially located forward of the handle cover 31 in the vehicle plan view. Put differently, the first inside portion 541 does not partially overlap with the handle cover 31 in the vehicle plan view. Further, the first bending portion 544 does not partially overlap with the handle cover 31 in the vehicle plan view.

The second inside portion 551 is partially located forward of the handle cover 31 in the vehicle plan view. Further, the second bending portion 554 is partially located forward of the handle cover 31 in the vehicle plan view. Put differently, the second inside portion 551 does not partially overlap with the handle cover 31 in the vehicle plan view. Further, the second bending portion 554 does not partially overlap with the handle cover 31 in the vehicle plan view.

The boundary 58 (hereinafter referred to as "the first lateral portion boundary 58") between the first upper surface lateral portion 54 and the front cover front portion 36 partially extends to the rearward and to one of the right and left sides in the vehicle plan view. On the other hand, the boundary 59 (hereinafter referred to as "the second lateral portion boundary 59") between the second upper surface lateral portion 55 and the front cover front portion 36 partially extends to the rearward and to the other of the right and left sides in the vehicle plan view. In the present exemplary embodiment, the first lateral portion boundary 58 extends to the rearward and to the left side in the vehicle plan view. On the other hand, the second lateral portion boundary 59 extends to the rearward and to the right side in the vehicle plan view.

The first lateral portion boundary 58 is partially located forward of the handle cover 31 in the vehicle plan view. In other words, the first lateral portion boundary 58 does not partially overlap with the handle cover 31 in the vehicle plan view. Likewise, the second lateral portion boundary 59 is partially located forward of the handle cover 31 in the vehicle plan view. In other words, the second lateral portion boundary 59 does not partially overlap with the handle cover 31 in the vehicle plan view.

In the saddle-riding type vehicle 1 according to the present exemplary embodiment as explained above, the first upper surface lateral portion 54 of the front cover 32 is partially located forward of the handle cover 31, and thus, it is possible to easily reduce the tilt angle of the front cover front portion 36 with respect to the vertical direction. It is thereby possible to inhibit occurrence of a situation that water moves from the front cover front portion 36, gets across the first upper surface lateral portion 54, and intrudes into the first storage portion 44.

Likewise, the second upper surface lateral portion 55 of the front cover 32 is partially located forward of the handle cover 31, and thus, it is possible to easily reduce the tilt angle of the front cover front portion 36 with respect to the vertical direction. It is thereby possible to inhibit occurrence of a situation that water moves from the front cover front portion 36, gets across the second upper surface lateral portion 55, and intrudes into the second storage portion 45.

Further, with reduction in tilt angle of the front cover front portion 36 with respect to the vertical direction, the upper end of the tilt surface of the front cover front portion 36 can be located as forward as possible, even where the lower end of the tilt surface of the front cover front portion 36 is fixed. Accordingly, enlarging the vehicle in the back-and-forth direction can be inhibited, and further, the space produced inside the front cover 32 can be expanded. Consequently, the capacities of the storage portions 44 and 45 can be easily expanded.

It should be noted that with achievement in enlargement of the space produced inside the front cover 32, a space for disposing the headlight 37 can be easily and reliably produced inside the front cover 32.

The first lateral portion boundary 58 is partially located forward of the handle cover 31 in the vehicle plan view. Likewise, the second lateral portion boundary 59 is partially located forward of the handle cover 31 in the vehicle plan view. Thus, the front cover front portion 36 and the front cover rear portion 35 can be easily formed.

The front cover rear portion 35 includes the first tilt portion 47 and the second tilt portion 48. The first tilt portion 47 enables an object to be easily put in or taken out of the first storage portion 44. Likewise, the second tilt portion 48 enables an object to be easily put in or taken out of the second storage portion 45.

The upper surface of the front cover rear portion 35 includes the first recess 51 and the second recess 52. The first recess 51 enables an object to be easily put in or taken out of the first storage portion 44. Likewise, the second recess 52 enables an object to be easily put in or taken out of the second storage portion 45.

The upper surface middle portion 53 includes the convexo-concave portion 532 located in front of the opening 531. The convexo-concave portion 532 enhances the stiffness of the upper surface middle portion 53. Further, the convexo-concave portion 532 extends in the vehicle back-and-forth direction. The structure can inhibit water from flowing toward either the first upper surface lateral portion 54 or the second upper surface lateral portion 55. Consequently, water can be inhibited from intruding into either the first storage portion 44 or the second storage portion 45.

The first upper surface lateral portion 54 and the front cover front portion 36 form a convex shape bending upward in the first lateral portion boundary 58. The structure can inhibit occurrence of a situation that water gets across the first lateral portion boundary 58 and intrudes into the first storage portion 44. Likewise, the second upper surface lateral portion 55 and the front cover front portion 36 form a convex shape bending upward in the second lateral portion boundary 59. The structure can inhibit occurrence of a situation that water gets across the second lateral portion boundary 59 and intrudes into the second storage portion 45.

The number of wheels of the saddle-riding type vehicle 1 according to the present teaching is not limited to two and may be three or more. For example, the saddle-riding type vehicle 1 may include two front wheels and one rear wheel. The saddle-riding type vehicle 1 is not limited to the scooter-type vehicle, and may be another type of motorcycle such as a sport motorcycle or a moped. Alternatively, the saddle-riding type vehicle 1 is not limited to the motorcycle, and may be another type of vehicle such as an ATV (All-Terrain Vehicle).

The structure of the front cover is not limited to that described in the aforementioned exemplary embodiment, and may be changed. For example, the position of the boundary between the front cover front portion and the front cover rear portion may be changed. The front cover rear portion may not be provided with the tilt portion. The front cover rear portion may not be provided with the recess. The upper surface middle portion may not be provided with the convexo-concave portion.

The first upper surface lateral portion may be entirely located forward of the handle cover in the vehicle plan view. Likewise, the second upper surface lateral portion may be entirely located forward of the handle cover in the vehicle plan view. The first lateral portion boundary may be entirely located forward of the handle cover in the vehicle plan view. Likewise, the second lateral portion boundary may be entirely located forward of the handle cover in the vehicle plan view.

In the aforementioned exemplary embodiment, the second upper surface middle portion 57 is a discrete member provided separately from the first upper surface lateral portion 54 and the second upper surface lateral portion 55, but may be integrated with these portions. In other words, the second upper surface middle portion 57 may be integrated with the first upper surface middle portion 56.

## Claims

1. A saddle-riding type vehicle, comprising:
a head pipe (11);
a steering shaft (15) being turnably supported by the head pipe (11);
a handle (21) being supported by an upper end of the steering shaft (15) and including a right grip portion (23) and a left grip portion (22);
a handle cover (31) covering front and rear sides of the handle (21); and
a front cover (32) being disposed lower than the handle cover (31), wherein the front cover (32) includes
a front cover rear portion (35) covering a rear side of the head pipe (11), and
a front cover front portion (36) covering a front side of the head pipe (11) and being disposed in front of the front cover rear portion (35),
the front cover front portion (36) is disposed so as to tilt obliquely upward to rear,
the front cover rear portion (35) includes at least one storage portion (44,45) disposed laterally to the steering shaft (15),
an upper surface of the front cover (32) includes
an upper surface middle portion (53) having an opening (531) enabling the steering shaft (15) to pass therethrough, and
at least one upper surface lateral portion (54,55) being disposed laterally to the upper surface middle portion (53) and being disposed in front of the storage portion (44,45) in a vehicle plan view, and
the front cover front portion (36) is provided separately from the front cover rear portion (35), the upper surface lateral portion (54,55) is included in the front cover rear portion (35) and a boundary (58,59) is provided between the first upper surface lateral portion (54,55) and the front cover front portion (36), **characterized in that**
the upper surface lateral portion (54,55) is at least partially located forward of the handle cover (31), and
the boundary (58,59) between the upper surface lateral portion (54,55) and the front cover front portion (36) is at least partially located forward of the handle cover (31) in the vehicle plan view, and the boundary (58,59) between the upper surface lateral portion (54,55) and the front cover front portion (36) partially extends to the rearward and to one of the right and left sides in the vehicle plan view.

2. A saddle-riding type vehicle according to claim 1, **characterized in that** the front cover rear portion (35) includes a tilt portion (47) located over the storage portion (44,45), and the tilt portion (47) tilts obliquely upward to front and continues to an upper surface of the front cover rear portion (35).

3. A saddle-riding type vehicle according to claim 1, **characterized in that** an upper surface of the front cover rear portion (35) includes a recess (51,52) forwardly recessed in the vehicle plan view, and
the recess (51,52) is located over the storage portion (44,45).

4. A saddle-riding type vehicle according to claim 3, **characterized in that** a front end of the recess (51,52) is located forward of the steering shaft (15).

5. A saddle-riding type vehicle according to claim 3 or 4, **characterized in that** the front cover rear portion (35) includes a tilt portion (47) located over the storage portion (44,45), and
the tilt portion (47) tilts obliquely upward to front and continues to the recess (51,52).

6. A saddle-riding type vehicle according to any of claims 1 to 5, **characterized in that** the upper surface middle portion (53) includes a convexo-concave portion (532) located in front of the opening (531), and
the convexo-concave portion (532) extends in a vehicle back-and-forth direction.

7. A saddle-riding type vehicle according to any of claims 1 to 6, **characterized in that** the upper surface lateral portion (54,55) and the front cover front portion (36) form a convex shape upwardly bending in the boundary (58,59).

8. A saddle-riding type vehicle according to any of claims 1 to 7, **characterized in that** the front cover rear portion (35) includes a first storage portion (44) and a second storage portion (45), wherein the first storage portion (44) and the second storage portion (45) are disposed in alignment in the right-and-left direction.

9. A saddle-riding type vehicle according to claim 8, **characterized in that** a key switch (46) is disposed adjacently to the second storage portion (45).

10. A saddle-riding type vehicle according to any of claims 1 to 9, **characterized in that** a first upper surface lateral portion (54) and a second upper surface lateral portion (55) are included in the front cover rear portion (35).

## Patentansprüche

1. Ein Sattel-Reit-Typ-Fahrzeug, das umfasst:
ein Kopfrohr (11);
eine Lenkwelle (15), die drehbar durch das Kopfrohr (11) gelagert ist;
eine Lenkstange (21), die durch ein oberes Ende der Lenkwelle (15) gelagert ist und einen rechten Griff-Abschnitt (23) und einen linken Griff-Abschnitt (22) beinhaltet;
eine Lenkstangen-Abdeckung (31), welche Vorder- und Rück-Seiten der Lenkstange (21) abdeckt; und
eine Vorder-Abdeckung (32), die niedriger als die Lenkstangen-Abdeckung (31) positioniert ist, wobei die Vorder-Abdeckung (32) beinhaltet
einen Vorder-Abdeckungs-Rück-Abschnitt (35), der eine Rück-Seite des Kopfrohrs (11) abdeckt; und
einen Vorder-Abdeckungs-Vorder-Abschnitt (36), der eine Vorder-Seite des Kopfrohrs (11) abdeckt, und vor dem Vorder-Abdeckungs-Rück-Abschnitt (25) positioniert ist, der Vorder-Abdeckungs-Vorder-Abschnitt (36) ist positioniert, sodass dieser schräg nach oben nach hinten geneigt ist,
der Vorder-Abdeckungs-Rück-Abschnitt (35) beinhaltet zumindest einen Lagerabschnitt (44, 45), der seitlich zu der Lenkwelle (15) positioniert ist,
eine obere Fläche der Vorder-Abdeckung (32) beinhaltet
einen oberen Flächen-Mittel-Abschnitt (53), der eine Öffnung (531) hat, die es der Lenkwelle (15) ermöglicht hindurch zu treten, und
zumindest einen oberen Flächen-Seit-Abschnitt (54, 55), der seitlich zu dem oberen Flächen-Mittel-Abschnitt (53) positioniert ist, und der vor dem Lagerabschnitt (44, 45) in der Fahrzeug-Draufsicht positioniert ist, und
der Vorder-Abdeckungs-Vorder-Abschnitt (36) ist getrennt von dem Vorder-Abdeckungs-Rück-Abschnitt (35) vorgesehen, der obere Flächen-Seit-Abschnitt (54, 55) ist in dem Vorder-Abdeckungs-Rück-Abschnitt (35) aufgenommen und eine Grenze (58, 59) ist zwischen dem ersten oberen Flächen-Seit-Abschnitt (54, 55) und dem Vorder-Abdeckungs-Vorder-Abschnitt (36) vorgesehen,
**dadurch gekennzeichnet, dass** der obere Flächen-Seit-Abschnitt (54, 55) zumindest teilweise vor der Lenkstangen-Abdeckung (31) angeordnet ist, und
die Grenze (58, 59) zwischen dem oberen Flächen-Seit-Abschnitt (54, 55) und dem Vorder-Abdeckungs-Vorder-Abschnitt (36) zumindest teilweise vor der Lenkstangen-Abdeckung (31) in der Fahrzeug-Draufsicht angeordnet ist, und die Grenze (58, 59), zwischen dem oberen Flächen-Seit-Abschnitt (54, 55) und dem Vorder-Abdeckungs-Vorder-Abschnitt (36), sich teilweise nach hinten und zu einer von der rechten und linken Seiten in der Fahrzeug-Draufsicht erstreckt.

2. Ein Sattel-Reit-Typ-Fahrzeug gemäß Anspruch 1, **dadurch gekennzeichnet, dass** der Vorder-Abdeckungs-Rück-Abschnitt (35) einen geneigten Abschnitt (47) beinhaltet, der über dem Lagerabschnitt (44, 45) angeordnet ist, und der geneigte Abschnitt (47) schräg nach oben nach vorne geneigt ist und zu einer obere Fläche des Vorder-Abdeckungs-Rück-Abschnitts (35) fortgeführt ist.

3. Ein Sattel-Reit-Typ-Fahrzeug gemäß Anspruch 1, **dadurch gekennzeichnet, dass** eine obere Fläche des Vorder-Abdeckungs-Rück-Abschnitts (35) eine Ausnehmung beinhaltet, die nach vorne in der Fahrzeug-Draufsicht ausgenommen ist, und
die Ausnehmung (51, 52) über dem Lagerabschnitt (44, 45) angeordnet ist.

4. Ein Sattel-Reit-Typ-Fahrzeug gemäß Anspruch 3, **dadurch gekennzeichnet, dass** ein Vorder-Ende der Ausnehmung (51, 52) vor der Lenkwelle (15) angeordnet ist.

5. Ein Sattel-Reit-Typ-Fahrzeug gemäß Anspruch 3 oder 4, **dadurch gekennzeichnet, dass** der Vorder-Abdeckungs-Rück-Abschnitt (35) einen geneigten Abschnitt (47) beinhaltet, der über dem Lagerabschnitt (44, 45) angeordnet ist, und
der geneigte Abschnitt (47) schräg nach oben nach vorne geneigt ist und bis zu der Ausnehmung (51, 52) fortgeführt ist.

6. Ein Sattel-Reit-Typ-Fahrzeug gemäß irgendeinem der Ansprüche 1 bis 5, **dadurch gekennzeichnet, dass** der obere Flächen-Mittel-Abschnitt (53) einen konvexkonkaven Abschnitt (532) beinhaltet, der vor der Öffnung (531) angeordnet ist, und der konvex-konkave Abschnitt (532) sich in die Fahrzeug-Rück-und-Vorder-Richtung erstreckt.

7. Ein Sattel-Reit-Typ-Fahrzeug gemäß irgendeinem der Ansprüche 1 bis 6, **dadurch gekennzeichnet, dass** der obere Flächen-Seit-Abschnitt (54, 55) und der Vorder-Abdeckungs-Vorder-Abschnitt (36) ein konvexe Form, die in der Grenze (58, 59) nach oben gebogen ist, bilden.

8. Ein Sattel-Reit-Typ-Fahrzeug gemäß irgendeinem der Ansprüche 1 bis 7, **dadurch gekennzeichnet, dass** der Vorder-Abdeckungs-Rück-Abschnitt (35) einen ersten Lagerabschnitt (44) und einen zweiten Lagerabschnitt (45) beinhaltet, wobei der erste Lagerabschnitt (44) und der zweite Lagerabschnitt (45) in Ausrichtung in der Rechts- und-Links-Richtung positioniert sind.

9. Ein Sattel-Reit-Typ-Fahrzeug gemäß Anspruch 8, **dadurch gekennzeichnet, dass** ein Schlüssel-Schalter (46) benachbart zu dem zweiten Lagerabschnitt (45) positioniert ist.

10. Ein Sattel-Reit-Typ-Fahrzeug gemäß irgendeinem der Ansprüche 1 bis 9, **dadurch gekennzeichnet, dass** ein erster oberer Flächen-Seit-Abschnitt (54) und ein zweiter oberer Flächen-Seit-Abschnitt (55) in dem Vorder-Abdeckungs-Rück-Abschnitt (35) beinhaltet sind.

## Revendications

1. Véhicule de type à selle comprenant :
un tube de fourche (11),
une colonne de direction (15) supportée par le tube de fourche (11) tout en pouvant tourner,
un guidon (21) supporté par l'extrémité supérieure de la colonne de direction (15) et incluant un organe de préhension droit (23) et un organe de préhension gauche (22),
un carter de guidon (31) recouvrant les côtés avant et arrière du guidon (21), et
un carter avant (32) placé plus bas que le carter de guidon (31), le carter avant (32) incluant :
une partie arrière de carter avant (35) recouvrant le côté arrière du tube de fourche (11), et
une partie avant de carter avant (36) recouvrant le côté avant du tube de fourche (11) et placée en avant de la partie arrière de carter avant (35),
la partie avant de carter avant (36) est placée de façon à pencher de manière oblique vers le haut jusqu'à l'arrière,
la partie arrière de carter avant (35) inclut au moins un organe de stockage (44, 45) placé latéralement sur la colonne de direction (15),
la surface supérieure du carter avant (32) inclut :
une partie médiane de surface supérieure (53) comportant une ouverture (531) autorisant la colonne de direction (15) à la traverser, et
au moins une partie latérale de surface supérieure (54, 55) placée latéralement à la partie médiane de surface supérieure (53) et placée en face de l'organe de stockage (44, 45) selon une vue en plan du véhicule, et
la partie avant de carter avant (36) est prévue pour être séparée de la partie arrière de carter avant (35), la partie latérale de surface supérieure (54, 55) est incluse dans la partie arrière de carter avant (35) et une limite (58, 59) est prévue entre la première partie latérale de surface supérieure (54, 55) et la partie avant de carter avant (36), **caractérisé en ce que**
la partie latérale de surface supérieure (54, 55) et au moins située partiellement à l'avant du carter de guidon (31), et
la limite (58, 59), située entre la partie latérale de surface supérieure (54, 55) et la partie avant de carter avant (36), est au moins située partiellement à l'avant du carter de guidon (31) selon une vue en plan du véhicule, et la limite (58, 59), située entre la partie latérale de surface supérieure (54, 55) et la partie avant de carter avant (36) se déploie partiellement vers l'arrière et vers l'un des côtés droit et gauche selon la vue en plan du véhicule.

2. Véhicule de type à selle selon la revendication 1, **caractérisé en ce que** la partie arrière de carter avant (35) inclut une partie inclinée (47) située au-dessus de l'organe de stockage (44, 45), et la partie inclinée (47) s'incline de façon oblique vers le haut jusqu'à l'avant et poursuit vers la surface supérieure de la partie arrière de carter avant (35).

3. Véhicule de type à selle selon la revendication 1, **caractérisé en ce que** la surface supérieure de la partie arrière de carter avant (35) inclut un évidement (51, 52) en creux vers l'avant selon la vue en plan du véhicule, et
l'évidement (51, 52) est situé au-dessus de l'organe de stockage (44, 45).

4. Véhicule de type à selle selon la revendication 3, **caractérisé en ce que** l'extrémité avant de l'évidement (51, 52) est située en avant de la colonne de direction (15).

5. Véhicule de type à selle selon la revendication 3 ou la revendication 4, **caractérisé en ce que** la partie arrière de carter avant (35) inclut une partie inclinée (47) située au-dessus de l'organe de stockage (44, 45), et
la partie inclinée (47) s'incline de manière oblique vers le haut jusqu'à l'avant et poursuit jusqu'à l'évidement (51, 52).

6. Véhicule de type à selle selon l'une quelconque des revendications 1 à 5, **caractérisé en ce que** la partie médiane de surface supérieure (53) inclut une partie convexe et concave (532) située à l'avant de l'ouverture (531), et
la partie convexe et concave (532) se déploie dans la direction d'avant en arrière du véhicule.

7. Véhicule de type à selle selon l'une quelconque des revendications 1 à 6, **caractérisé en ce que** la partie latérale de surface supérieure (54, 55) et la partie avant de carter avant (36) prennent une forme convexe se repliant vers le haut dans la limite (58, 59).

8. Véhicule de type à selle selon l'une quelconque des revendications 1 à 7, **caractérisé en ce que** la partie arrière de carter avant (35) inclut un premier organe de stockage (44) et un second organe de stockage (45), le premier organe de stockage (44) et le second organe de stockage (45) étant alignés dans la direction droite gauche.

9. Véhicule de type à selle selon la revendication 8, **caractérisé en ce qu'un** commutateur à clé (46) est placé de façon adjacente au second organe de stockage (45).

10. Véhicule de type à selle selon l'une quelconque des revendications 1 à 9, **caractérisé en ce qu'une** première partie latérale de surface supérieure (54) et une seconde partie latérale de surface supérieure (55) sont incluses dans la partie arrière de carter avant (35).
